(19)

Europäisches
Patentamt
European
Patent Office
Office européen
des brevets

(11) **EP 1 971 171 A1**

(12) **EUROPEAN PATENT APPLICATION**

(43) Date of publication:
**17.09.2008 Bulletin 2008/38**

(51) Int Cl.:
*H04Q 7/38* (2006.01)

(21) Application number: **07005486.1**

(22) Date of filing: **16.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Chang, Xin**
**518054 Shenzhen (CN)**
• **Halfmann, Rüdiger**
**67697 Otterberg (DE)**
• **Dr. Zhen Ping Hu**
**100102 Beijing (CN)**
• **Luo, Jijun**
**81549 München (DE)**

(54) **Method for allocating resources in a distributed frequency division multiple access system**

(57) A method for allocating resources in a distributed frequency division multiple access system (D-FDMA) for an uplink transmission of feedback signals from a user equipment device (UE) to a base station (BS) depending on the resources allocated for downlink transmission of data from the base station (BS) to said user equipment device (UE).

FIG 2

```
          Start
            │
            ▼
┌──────────────────────┐
│  receiving broadcasted│
│ resource scheduling   │── S1
│      data             │
│   for downlink        │
│  data transmission    │
└──────────────────────┘
            │
            ▼
┌──────────────────────┐
│   sorting assigned    │
│   HARQ-process IDS    │── S2
│  and encoding sorted  │
│   HARQ-process IDS    │
└──────────────────────┘
            │
            ▼
┌──────────────────────┐
│  allocating resources │
│ for uplink data       │
│ transmission          │── S3
│  depending on code    │
│  length of encoded    │
│  HARQ-process IDS     │
└──────────────────────┘
            │
            ▼
┌──────────────────────┐
│ transmitting feedback │
│ signals via allocated │── S4
│ resources for uplink  │
│  data transmission    │
└──────────────────────┘
            │
            ▼
          Stop
```

EP 1 971 171 A1

## Description

The invention refers to a method for allocating resources in a distributed frequency division multiple access system (D-FDMA) as used in 3G radio access communication systems.

3G is short for third generation technology. The 3G-technology is mostly used in the context of mobile phone standards. The services associated with 3G technology provide ability to transfer simultaneously both voice data, i.e. telephone call, and non-voice data such as downloading information by exchanging e-mails and instant massaging. The third generation (3G) technology provides high broadband capacity for a great number of customers and also higher data rates. The long-term evolution (LTE) 3G radio access technology provides a high data rate, low latency and packet optimized radio access technology.

To achieve this, the 3G radio access technology uses orthogonal frequency division multiple access OFDMA for a downlink data transmission of data from a base station BS to user equipment devices UE to diminish intersymbol interference (ISI) and to provide a scaleable bandwidth. The base station BS forms a network end node of a wireless access network. By using adjacent and separate sub-carriers SC mapping schemes, there exist two variants of single carrier (SC) frequency division multiple access, i.e. localized FDMA (LFDMA) and distributed FDMA (DFDMA).

Orthogonal frequency division multiple access OFDMA is a multi-user version of the OFDM digital modulation scheme. Multiple-access is achieved in OFDMA by signing sub-sets of sub-carriers SC to individual users. This allows simultaneous low data rate transmission for several users. Based on feedback information about channel conditions an adaptive of user to sub-carrier assignment can be achieved. If this assignment is performed sufficiently fast it further improves the robustness to fast fading and narrow-band cochannel interference and makes it possible to achieve even better system spectral efficiency. In OFDM, a different number of sub-carriers SC can be assigned to different users in view to support differentiated quality of service QoS, i.e. to control a data rate and error probability individually for each user.

Distributed FDMA for uplink data transmission comprises a non-continuous comb-shaped spectrum which is distributed over the entire available frequency bandwidth. Distributed FDMA has a lower peak to average power ratio (PAPR) than multiple-carrier transmission. Due to the distributed nature of the composition spectrum, frequency diversity can be acquired by DFDMA to keep the users from deep fading.

The hybrid automatic repeat request (HARQ) is a variation of the ARQ-error control method, giving a better performance than ordinary ARQ, particularly over wireless channels. HARQ is used in high-speed downlink packet access (HSDPA) and in high-speed uplink packet access (HSUPA) to provide a high-speed data transmission on downlink and uplink respectively for mobile phone network such as UMTS, and the IEEE 802.16-2005 standard for mobile broadband wireless access, also known as "mobile WIMAX". The high-speed downlink packet access HSDPA achieves an increase in the data transfers rates by defining a W-CDMA or TD-SCDMA-channel i.e. a high-speed downlink shared channel (HS-DSCH) used for downlink communications to the mobile device. High-speed uplink packet access HSUPA uses an uplink enhanced dedicated channel (E-DCH) with which it employs a link adaptation method such as HARQ incremental redundancy making retransmissions more effective. HSUPA operates on a request-grant principle where the user equipment devices UE request the permission to send data and a scheduler decides when and how many user equipment devices UE are allowed to do so. Request for transmission contains data about the state of the transmission buffer and the queue at the user equipment device UE.

In conventional frequency division multiple access systems (FDMA), a dedicated physical channel is assigned for the acknowledgement signaling ACK. The provision of a dedicated physical channel does not allow flexible allocation of resources for uplink data transmission of feedback signals from the user equipment devices UE to the base station BS so that resource utilization is low.

Accordingly, it is an object of the present invention to provide a method for allocating resources in a frequency division multiple access system in a flexible way to optimize feedback signaling.

The invention provides a method for allocating resources in a distributed frequency division multiple access system D-FDMA for an uplink transmission of feedback signals from a user equipment device UE to the base station BS depending on the resources allocated for downlink transmission of data from the basestation BS to the user equipment device UE.

In one embodiment of the method according to the present invention the resources allocated for uplink transmission of the feedback signals from the user equipment device UE to the base station BS are increased in case that more resources are allocated to a downlink transmission of data from the base station BS to the user equipment device UE.

In one embodiment of the method according to the present invention the feedback signals are formed by hybrid automatic repeat request HARQ-feedback signals.

In one embodiment of the method according to the present invention the allocated resources are formed by allocated frequency resources.

In one embodiment of the method according to the present invention the allocation of resources for the feedback signals is performed adaptively corresponding to a resource allocation for downlink transmission of data of the same hybrid automatic repeat request (HARQ) process.

In one embodiment of the method according to the present invention each user equipment device UE receives resource scheduling data which is broadcasted by the base station BS to the user equipment devices UE.

In one embodiment of the method according to the present invention the broadcasted resource scheduling data indicates which resources are allocated for downlink data transmission from the base station BS to the respective user equipment device UE in a hybrid automatic repeat request (HARQ) process.

In one embodiment of the method according to the present invention a unique HARQ-process identification number is assigned to each HARQ-process in a current data transmission time interval according to the sequence of indication of the HARQ-processes during broadcast of the resource scheduling data by said base station BS.

In one embodiment of the method according to the present invention the assigned HARQ-process identification numbers are sorted depending on the allocated resources for downlink data transmission.

In one embodiment of the method according to the present invention the sorted HARQ-process identification numbers are encoded by a Huffmann-code algorithm generating a unique Huffman-encoded HARQ-process identification number for each HARQ-process.

In one embodiment of the method according to the present invention the resources for uplink transmission of feedback signals for a HARQ-process are allocated depending on a code-length of said Huffman-encoded HARQ-process identification number of the respective HARQ-process.

In one embodiment of the method according to the present invention more resources for uplink transmission of feedback signals for a HARQ-process are allocated with shorter code-length of the Huffmann-encoded HARQ-process identification number of the respective HARQ-process.

In one embodiment of the method according to the present invention at least one feedback signal of the respective HARQ-process is transmitted by the user equipment device UE to the base station BS by means of the allocated resources for uplink data transmission.

In one embodiment of the method according to the present invention the feedback signal is formed by an acknowledgement signal ACK acknowledging a reception of data packets by the user equipment device UE.

In one embodiment of the method according to the present invention the allocated frequency resources are formed by allocated frequency bandwidth.

In one embodiment of the method according to the present invention the allocated frequency resources are formed by an allocated number of sub-carriers.

The invention further provides a distributed frequency division multiple access system DFSDMA which comprises at least one base station BS and user equipment devices UE, wherein resources for an uplink transmission of feedback signals from said user equipment devices UE to said base station BS are allocated depending on the resources allocated for downlink transmission of data from the base station BS to the user equipment devices UE.

In the following possible embodiments of the method and the system according to the present invention are described with reference to the enclosed figures.

Fig. 1 shows a block-diagram illustrating the interaction between a base station and a user equipment device according to one embodiment of the system according to the present invention;

Fig. 2 shows a flow-chart illustrating an embodiment of the method for allocating resources in a distributed frequency multiple division multiple access system according to one embodiment of the method according to the present invention;

Fig. 3 shows an embodiment of an FDMA-transmitter within a user equipment device in the time domain according to one embodiment of the present invention;

Fig. 4 shows a block diagram of an FDMA-transmitter within a user equipment device in the frequency domain according to one embodiment of the present invention;

Fig. 5 shows a frequency allocation scheme of a distributed FDMA-system as employed by the method according to the present invention;

Fig. 6 shows a table of an example for illustrating the functionality of the method according to the present invention;

Fig. 7 shows an example of a Huffmann-tree as employed by a method according to the present invention;

Fig. 8 shows a Huffmann-tree constructed by bandwidth allocation for downlink data transmission for the example given in fig. 6;

Fig. 9 shows a table of a Huffmann-encoded HARQ-process identification number for the example given in figs.6, 8;

Fig. 10 shows a resource allocation for the feedback-signaling uplink of the HARQ-processes for the example given in fig. 6, 8, 9;

Fig. 11 shows a dependency of a bit-error-rate performance of a distributed FDMA-system according to the present invention depending on an allocated number of sub-carriers as uplink signaling resources.

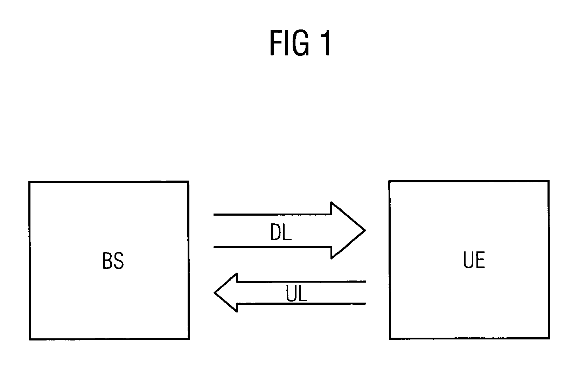

As can be seen from fig. 1, a distributed frequency division multiple access systems D-FDMA comprises at least one base station BS and least one user equipment device UE which exchange data via an air-interface radio link. The FDMA-system has one base station BS and normally several or a plurality of user equipment devices UE which communicate with the base station BS over a shared uplink transmission channel. The base station BS transmits data to the user equipment devices UE over a downlink DL and receives feedback signals from the user equipment devices UE via an uplink UL. In the FDMA system according to the present invention an adaptive resource allocation mechanism of the resources allocated for uplink transmission of the feedback signals is provided allowing a parallel HARQ feedback from the user equipment devices UE over a shared data transmission channel. The allocated resources for the uplink transmission are in a preferred embodiment formed by allocated frequency resources i.e. frequency bandwidths. On the basis of the resource allocation on the downlink DL (also called forward link), between the base station BS and a user equipment device UE the corresponding bandwidth of the uplink UL (also called feedback link) is allocated by the method according to the present invention to increase reliability of the hybrid automatic repeat request HARQ mechanism so that an efficiency of data transmission is improved.

In the method according to the present invention the resources allocated for uplink transmission of feedback signals such as an acknowledgment signal ACK from the user equipment device UE to the base station BS are increased in case that more resources are allocated to the downlink transmission of data from the base station BS to the respective user equipment device UE.

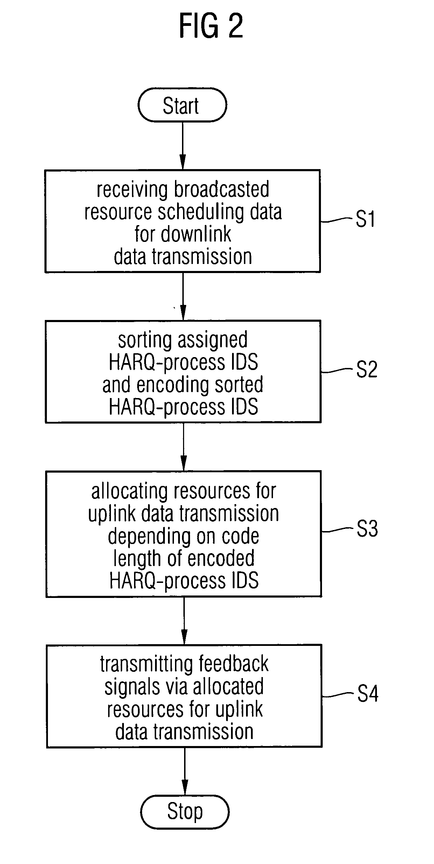

Fig. 2 shows a flow-chart illustrating a possible embodiment of the method according to the present invention for allocating resources in a distributed frequency multiple access system DFDMA.

In a step S1 the user equipment devices UE receive broadcasted resource scheduling data for downlink data transmission. The base station BS broadcasts the resource scheduling data for downlink data transmission to all user equipment devices within its range wherein the resource scheduling data indicates which resources are allocated for downlink data transmission from the base station BS to the respective user equipment devices UE.

The broadcasting messages are received by a receiver unit within the user equipment device UE and contain scheduling information for the HARQ forward link. To all HARQ-processes for the actual transmission interval, i.e. frame, are assigned a unique identification number. The unique HARQ-process identification number is assigned to each HARQ-process in the current data transmission time interval according to the sequence of indication of the HARQ-processes during broadcasting of the resource scheduling data by the base station BS.

In a further step S2 the assigned HARQ-process identification numbers are sorted and then the sorted HARQ-process identification numbers are encoded by an encoding algorithm such as a Huffmann-algorithm. The Huffmann-encoding algorithm is used for lossless data compression. The Huffman-encoding algorithm has a variable length code table for encoding source symbols such as a HARQ-process identification number.

After both the base station BS and the user equipment device UE have applied the Huffmann-encoding algorithm to the sorted HARQ-process identification numbers of the HARQ-processes in Step S2 in a further step S3 the resources for uplink data transmission are allocated depending on the code-length of the encoded HARQ-process identification numbers, as can be seen in fig. 2. The resource allocation, for instance the bandwidth allocation, for the uplink UL is made both by the user equipment device UE and the base station BS according to the Huffmann-code of the corresponding forward link obtained in step S2. The shorter the code-length is the more resources for the feedback via the uplink are assigned. Consequently, the feedback is more reliable. Accordingly, all frequency components having a header comprising a sequence number of matching Huffmann-codes are assigned to the corresponding uplink.

In method according to the present invention a shorter code is assigned to a HARQ-identification number belonging to a HARQ-process to which more forward link resources have been assigned.

The feedback signals such as an acknowledgement signal is transmitted via the allocated uplink resources in step S4. The feedback signal indicates the reception of data packets DP by the user equipment device UE.

By encoding the sorted HARQ-process identification numbers it is not necessary according to the present invention to notify the user equipment devices UE about the allocation of the resources because both base station BS and user equipment devices UE know the allocated resources by means of the HARQ-process identification number encrypted by the Huffmann-code.

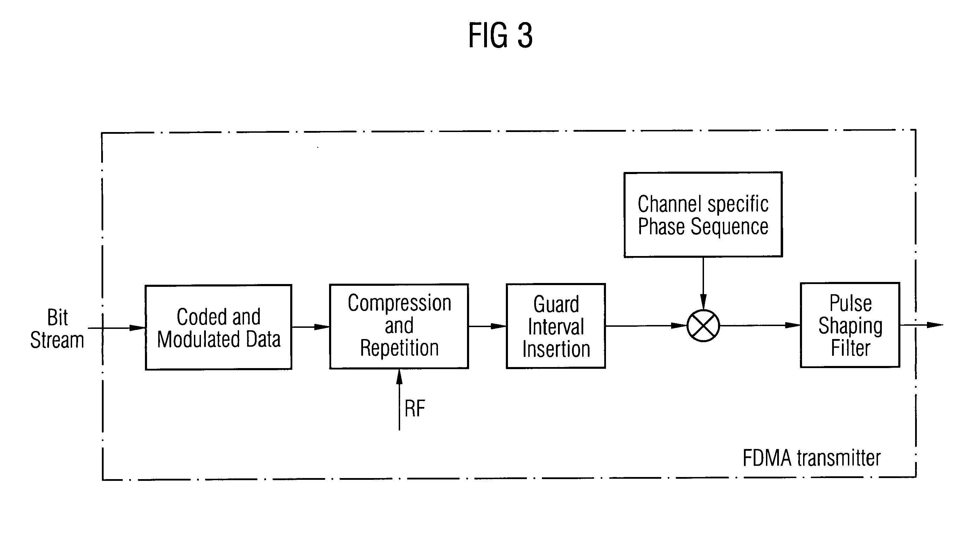

Fig. 3 shows a block-diagram of an FDMA-transmitter provided in a user equipment device UE in the time domain according to one embodiment of the FDMA system according to the present invention.

In the time domain a total frequency bandwidth for feedback signaling is fixed. When the bandwidth of the corresponding downlink data transmission from the base station BS to the user equipment device UE is increased more resources are allocated for uplink transmission of feedback signals by the FDMA-transmitter of the user equipment device UE to the base station BS. This is performed in a preferred embodiment by decreasing a repetition factor RF by compression and repetition unit by the FDMA-transmitter as shown in fig. 3. By modulating a channel specific phase sequence the respective user equipment device is identified by the serving base station BS. A bit stream from a data source of the user equipment device UE is encoded by a coding unit and modulated. A compression and repetition unit compresses the data symbol stream wherein the repetition factor RF is decreased to allocate more sources for the feedback signaling in case that the resources of the corresponding downlink for data transmission of the respective user equipment device UE has been increased. After insertion of a guard interval and modulation with a channel specific phase-sequence a baseband pulse-shaped transmission signal is formed, and transmitted by the user equipment device UE with needed RF processing to the base station BS.

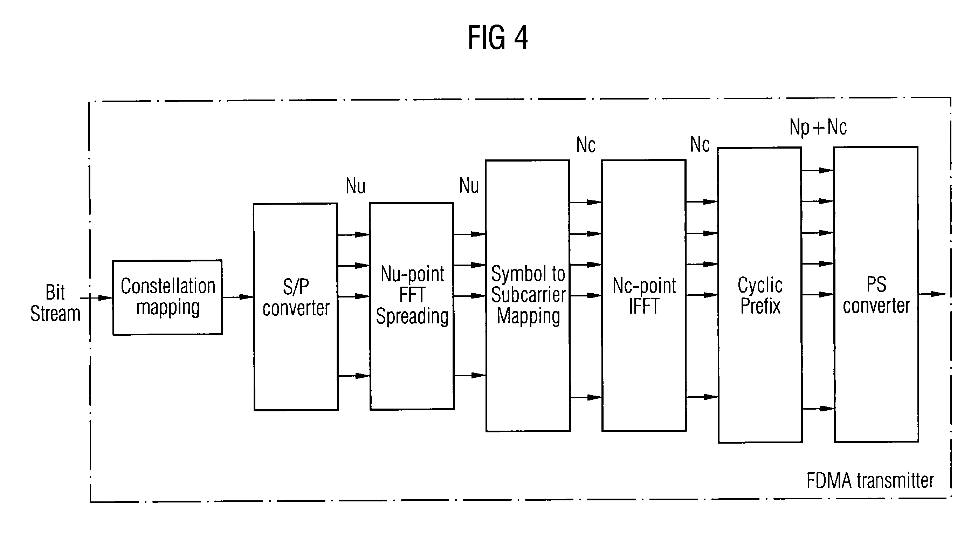

Fig. 4 shows an embodiment of an FDMA-transmitter within a user equipment device UE in the frequency domain as employed in one embodiment of the system according to the present invention. In the frequency domain by varying the total number of frequency components for feedback signaling is implemented in a preferred embodiment by changing the number of $N_U$ points to perform a fast fourier-transformation FFT and distributing them to the entire available bandwidth with equal spacing into an IFFT unit for performing an inverse fast fourier-transformation. As can be seen from fig. 4 a data stream generated by a data source in the user equipment device UE passes a constellation mapping unit and the serial data stream is converted by a serial/parallel converter to parallel data flow for performing FFT spreading.

After performing a symbol to sub-carrier mapping an inverse fast fourier-transformation is done. After having passed a cyclix/prefix unit the parallel data stream is then reconverted into a serial data stream by a parallel serial converter as shown in fig. 4.

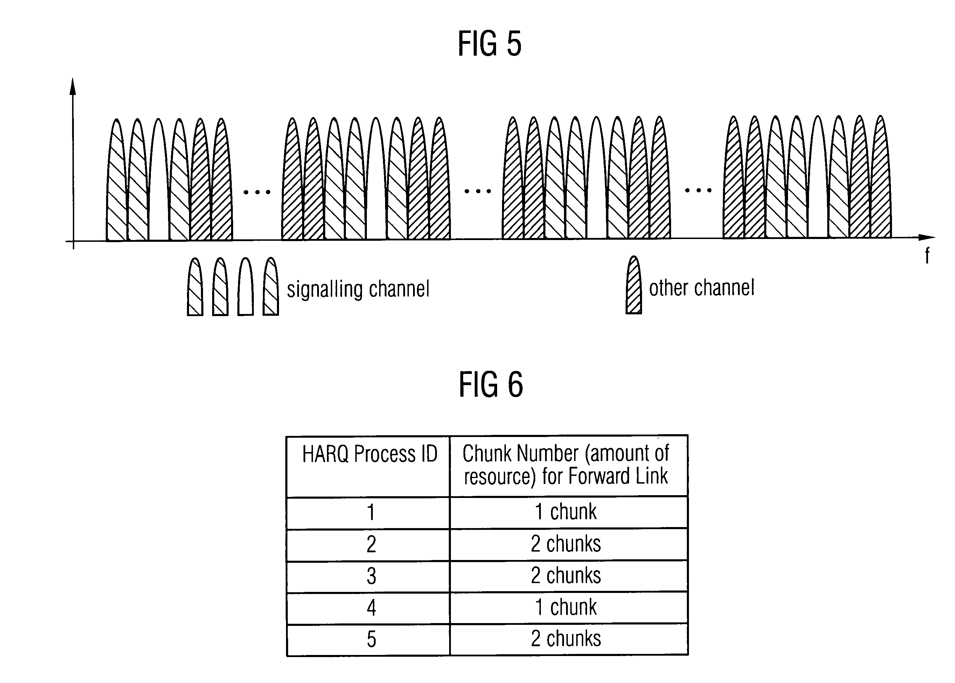

Fig. 5 shows an example of a frequency allocation scheme in the distributed FDMA-system as employed by a method according to the present invention. In the distributed FDMA-system the modulated signaling symbols are distributed to a group of equidistant frequency components. By distributing the symbols the frequency diversity is utilized to combat frequency selected fading.

Fig. 6 shows a table for a simple example in order to illustrate the method for allocating resources in a distributed frequency division multiple access system FDMA according to the present invention. In the given example there are five HARQ-process having HARQ-process identification numbers one to five. Each HARQ-process provides corresponding numbers of chunks indicating the amount of resources allocated for the downlink DL between the base station BS and the user equipment device UE. Each chunk indicates a combination of time and frequency allocation for OFDM data transmission, i.e. a given a number of OFDM symbols in the time domain transmitted via a number of sub-carriers SC in the frequency domain. In the given example HARQ-process 2, 3, 5 comprise two chunks whereas HARQ-process 1, 4 only comprise one chunk i.e. each HARQ-process 2, 3, 5 comprise more downlink data transmission resources than the HARQ-processes 1, 4.

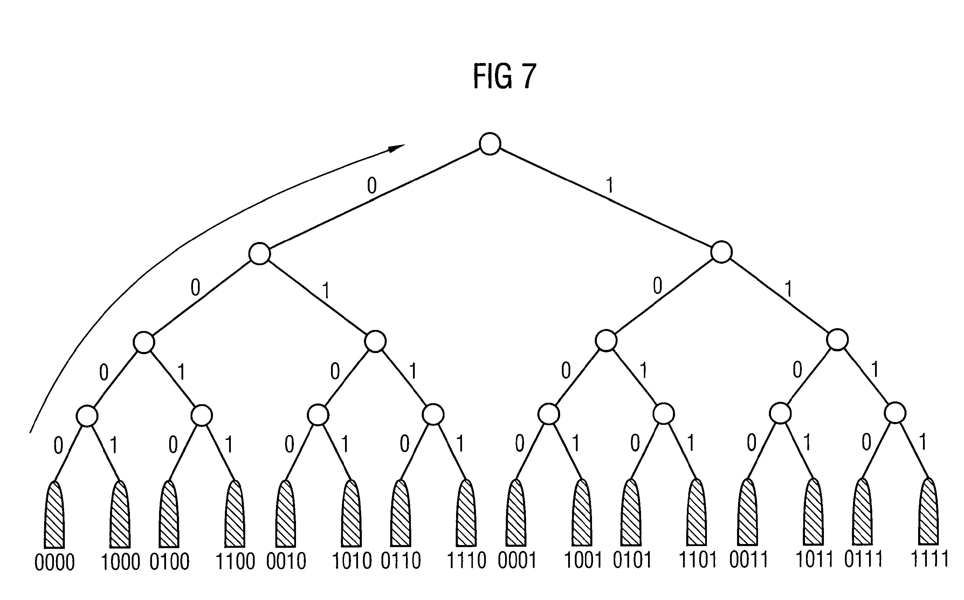

Fig. 7 shows an example of a Huffmann-code tree for identification of a resource granularity by a sequence number of the HARQ-process. A frequency component is identified by a unique sequence number with h bits where h is the so-called maximum height of the Huffmann-code tree. Accordingly, $2^h$ is greater or equal to the maximum number of HARQ-processes in one frame i.e. data transmission time interval. In the given example of fig. 7 the maximum Huffmann-tree height is 4; this means that the total granularity number is $2^4 = 16$ for all uplinks UL. In the given example of fig. 6 there are a total of five HARQ-processes. Each of the HARQ processes has a weight value of chunks allocated to the downlink DL. In the given example if two HARQ-processes have the same weight value, for example two chunks, a selection is performed depending on the HARQ-identification number sequence.
Consequently, the Huffmann-coding of the process is unique.

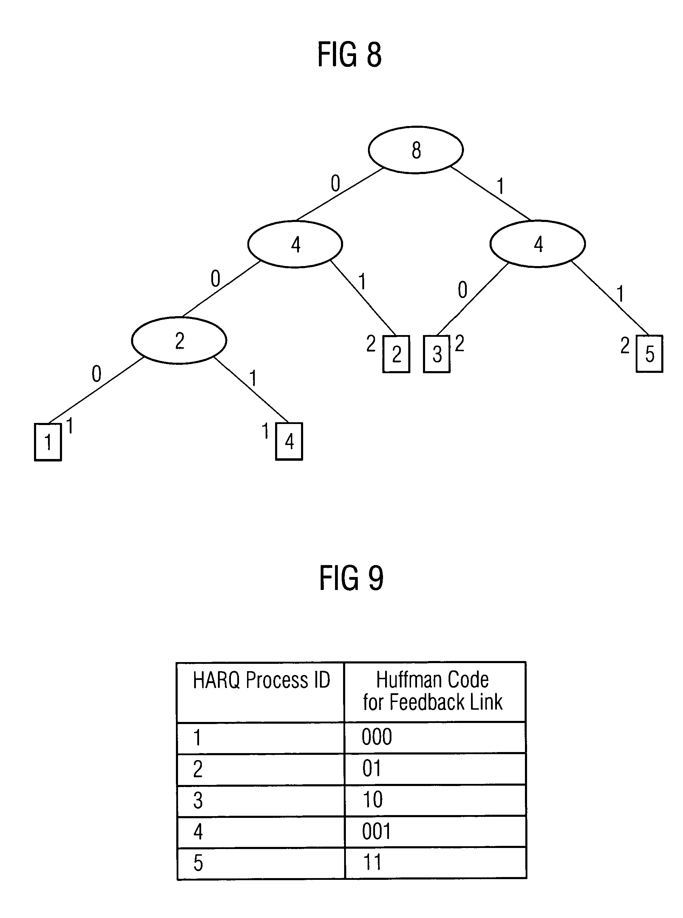

Fig. 8 shows an example of the constructed Huffmann-tree depending on the bandwidth allocation of the downlink DL for the example given in fig. 6.

Fig. 9 shows a corresponding table for the Huffmann-encoded HARQ-process identification number of the example given in fig. 6. As can be seen in fig. 8, for example, HARQ-processes 1, 4 having the lowest chunk number i.e. one chunk indicating a low account of allocated resources in the downlink DL have a lower level in the constructed Huffmann-tree than the processes 2, 3, 5 comprising each two chunks in the downlink DL. Accordingly, the Huffmann-code length of the encoded HARQ-process identification number of these processes is longer, i.e. three bits in code-length, than the encoded HARQ-process identification numbers of HARQ-process 2, 3, 5 having only two bits as shown in fig. 9.

Depending on the code length of the Huffmann-encoded HARQ-process identification number the resources for the uplink data transmission of feedback signals is allocated. For example to the HARQ-processes having the HARQ-process identification numbers 1, 4 as shown in fig. 9, i. e. Huffmann-codes "000" and "001", only two sub-carriers SC are allocated for the transmission of an acknowledgment signal via an uplink UL transmission whereas the other HARQ-process having the HARQ-process identification numbers 2, 3, 5 with the relative short code-length of two bits, i.e.

Huffmann codes "01", "10", "11" four sub-carriers SC are allocated for the signaling so that all sixteen available sub-carriers SC are assigned for the five different HARQ-processes depending on the resources allocated in the forward link, i.e. downlink DL.

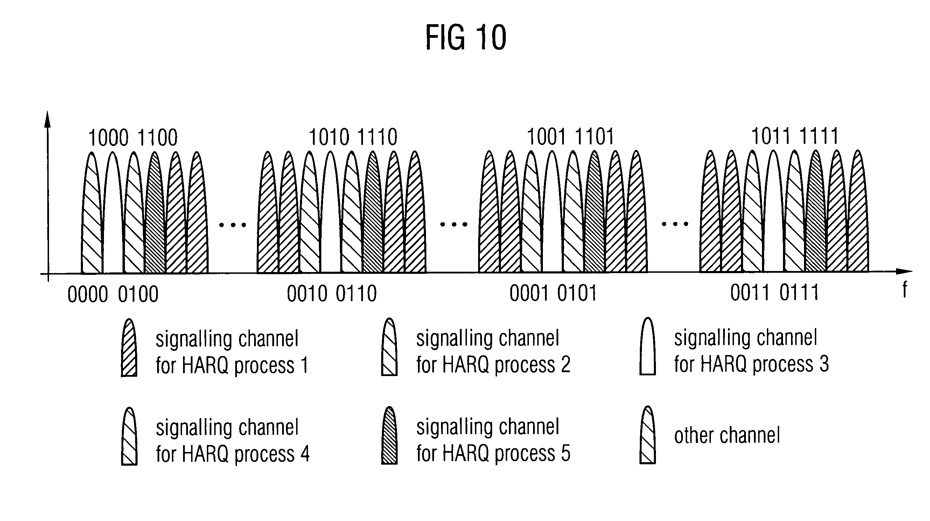

Fig. 10 shows the resource allocation for the uplink UL for transmitting the feedback signal for the different HARQ-processes as shown in fig. 9.

The method according to the present invention takes into account that the efficiency of a HARQ-mechanism is impacted by the quality of the downlink DL and the uplink UL together. For a Markovian error channel model, a burst characterized by a two state Markov-chain is adopted as a good approximation for a Raleigh fading channel. This transition probability matrices for the forward link, i.e. downlink DL and the feedback-link i.e. uplink UL are given as follows.

$$M_{DL} = \begin{bmatrix} P_{TT} & P_{TF} \\ P_{FT} & P_{FF} \end{bmatrix}, \qquad M_{UL} = \begin{bmatrix} q_{TT} & q_{TF} \\ q_{FT} & q_{FF} \end{bmatrix}$$

Accordingly, a through-put of acknowledgement-based automatic repeat request signaling can be obtained as following:

$$\eta = \frac{P_{FT} q_{FT}}{(P_{TF} + P_{FT})(q_{TF} + q_{FT})}$$

wherein p and q are probabilities of transitions from a true state to a false state and vice versa. As can be seen from the above equation it becomes evident that the diminished quality of the feedback link deteriorates the performance of the whole process.

The through-put indicates a fraction of time where the acknowledgement signal ACK can be transmitted successfully i.e. to indicate the probability of successful transmission of the acknowledgement signal ACK.

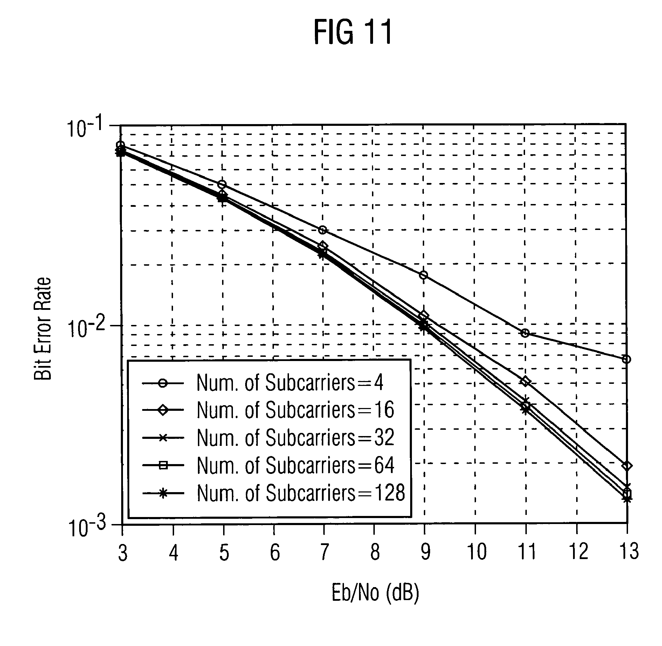

Fig. 11 shows a signal diagram showing the dependency of bit-error-rate BER performance of a distributed FDMA-system depending on a number of sub-carriers NSC allocated in an uplink UL for the acknowledgement ACK feedback signal. As can be seen from fig. 11 increasing the allocated bandwidth of the uplink UL a bit-error-rate BER for the distributed FDMA-system is decreasing significantly.

The parameters employed for the simulation scenario of fig. 11 are given in the following table:

| Parameter | Value | Parameter | Value |
|---|---|---|---|
| Active users | 4 | Channel model | IMT-2000, VA |
| System bandwidth | 10MHz | Sub-carrier spacing | 15 kHz |
| Sampling rate | 15.36MHz | Long symbol time | 66.67$\mu$s |
| Modulation scheme | QPSK | Long symbol occupied subcarriers | 600 |
| Scheduling delay | 2ms | Long symbol samples | 1024 |
| PAPR threshold | 7.1 dB | Short symbol time | 33.33$\mu$s |
| Frequency offset | 1% of sub-carriers spacing | Short symbol occupied subcarriers | 300 |

The allocated bandwidth for the feedback i.e. uplink UL impacts the overall performance of a HARQ-process.

By using the coding scheme the method according to the present invention does not have to explicitly assign specific physical resources for carrying the acknowledgment feedback signaling to the user equipment devices UE by a serving base station BS. According to the current indication of resources exploited in downlink DL for the user equipment device UE and by broadcasting information data on resource usage in the serving cell the user equipment device UE can automatically distil schedule information data of a physical resource carrying the acknowledgement feedback signaling.

In one embodiment of the method according to the present invention the resource assignment is controlled solely by the base station BS.

In another embodiment the source assignment is controlled by the user equipment device UE.

In a further embodiment the resource assignment is controlled by the cooperation of the base station BS and the user equipment device UE. Signaling the information indicating the resources for carrying feedback acknowledgement feedback signals is not needed in the method according to the present invention since this information is implied in the resource information data for the data transmission. Accordingly, the method according to the present invention has a lower signaling overhead than a system with actual signaling transmission.

**Claims**

1. A method for allocating resources in a distributed frequency division multiple access system (D-FDMA) for an uplink transmission of feedback signals from a user equipment device (UE) to a base station (BS) depending on the resources allocated for downlink transmission of data from the base station (BS) to said user equipment device (UE).

2. The method according to claim 1, wherein the resources allocated for uplink transmission of said feedback signals from the user equipment device (UE) to the base station (BS) are increased in case that more resources are allocated to a downlink transmission of data from the base station (BS) to the user equipment device (UE).

3. The method according to claim 1, wherein the feedback signals are formed by HARQ (hybrid automatic repeat request) feedback signals.

4. The method according to claim 1, wherein the allocated resources are formed by allocated frequency resources.

5. The method according to claim 3,
   wherein an allocation of resources for the feedback signals is performed adaptively to a corresponding allocation for downlink transmission of data of the same HARQ-process.

6. The method according to claim 1,
   wherein each user equipment device (UE) receives resource scheduling data broadcasted by said base station (BS).

7. The method according to claim 6,
   wherein said broadcasted scheduling data indicates which resources are allocated for downlink data transmission from the base station (BS) to the respective user equipment devices (UE) in HARQ (hybrid automatic repeat request) processes.

8. The method according to claim 7,
   wherein a unique HARQ process identification number is assigned to each HARQ process in a current data transmission time interval according to the sequence of indication of said HARQ-processes during boradcast of said resource scheduling data by said base station (BS).

9. The method according to claim 8,
   wherein the assigned HARQ-process identification numbers are sorted depending on the resources for downlink data transmission allocated to the respective HARQ-process.

10. The method according to claim 9,
    wherein the sorted HARQ-process-identification numbers are encoded by a Huffmann algorithm to generate a unique Huffmann encoded HARQ-process-identification number for each HARQ process.

11. The method according to claim 10,
    wherein resources for uplink transmission of feedback signals for a HARQ-process are allocated depending on a code length of said Huffmann encoded HARQ-process identification number of said HARQ process.

12. The method according to claim 11,
    wherein more resources for uplink transmission of feedback signals for a HARQ-process are allocated with shorter code length of said Huffmann encoded HARQ-process identification number of said HARQ process.

13. The method according to claim 12,
    wherein at least one feedback signal for the respective HARQ-process is transmitted by the user-equipment device (UE) to said base station (BS) by means of the allocated resources for uplink transmission.

14. The method according to claim 13,
wherein said feedback signal is formed by an acknowledged signal (ACK) acknowledging a reception of data packets (DP) by said user-equipment device (UE).

15. The method according to claim 4,
wherein the allocated frequency resources are formed by allocated frequency bandwidths.

16. The method according to claim 1,
wherein the allocated frequency resources are formed by an allocated number of subcarriers (SC).

17. A distributed frequency division multiple access (FDMA) system comprising at least one base station (BS) and user equipment devices (UE),
wherein resources for an uplink transmission of feedback signals from said user equipment devices (UE) to said base station (BS) are allocated depending on the resources allocated for downlink transmission of data from said base station (BS) to said user equipment devices (UE).

# FIG 1

BS

DL →

← UL

UE

# FIG 2

```
        ( Start )
            │
            ▼
┌─────────────────────┐
│   receiving          │
│ broadcasted          │
│ resource scheduling  │── S1
│ data for downlink    │
│ data transmission    │
└─────────────────────┘
            │
            ▼
┌─────────────────────┐
│   sorting assigned   │
│  HARQ-process IDS    │── S2
│  and encoding sorted │
│  HARQ-process IDS    │
└─────────────────────┘
            │
            ▼
┌─────────────────────┐
│  allocating resources│
│  for uplink data     │
│  transmission        │── S3
│  depending on code   │
│  length of encoded   │
│  HARQ-process IDS    │
└─────────────────────┘
            │
            ▼
┌─────────────────────┐
│  transmitting        │
│  feedback signals    │
│  via allocated       │── S4
│  resources for uplink│
│  data transmission   │
└─────────────────────┘
            │
            ▼
        ( Stop )
```

# FIG 3

EP 1 971 171 A1

FIG 4

FDMA transmitter

EP 1 971 171 A1

## FIG 5

signalling channel · · · other channel

f

## FIG 6

| HARQ Process ID | Chunk Number (amount of resource) for Forward Link |
| --- | --- |
| 1 | 1 chunk |
| 2 | 2 chunks |
| 3 | 2 chunks |
| 4 | 1 chunk |
| 5 | 2 chunks |

EP 1 971 171 A1

# FIG 7

EP 1 971 171 A1

# FIG 8

# FIG 9

| HARQ Process ID | Huffman Code for Feedback Link |
|---|---|
| 1 | 000 |
| 2 | 01 |
| 3 | 10 |
| 4 | 001 |
| 5 | 11 |

# FIG 10

signalling channel
for HARQ process 1

signalling channel
for HARQ process 2

signalling channel
for HARQ process 3

signalling channel
for HARQ process 4

signalling channel
for HARQ process 5

other channel

EP 1 971 171 A1

# FIG 11

**European Patent Office**

**EUROPEAN SEARCH REPORT**

Application Number

EP 07 00 5486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM EUROPE: "Considerations on Multiplexing of Control and User Data for xFDMA based E-UTRA Uplink Evaluation" 3GPP TSG RAN WG1 #42BIS, R1-051102, [Online] 10 October 2005 (2005-10-10), XP002446638 San Diego, USA Retrieved from the Internet: URL:www.3gpp.org> [retrieved on 2007-08-10] section 2.1.2.3 ----- | 1-17 | INV. H04Q7/38 |
| X | INTERDIGITAL: "Scheduling and Multiplexing of CQI and ACK/NACK Feedback for Single Carrier FDMA in Evolved UTRA Uplink" 3GPP TSG RAN WG1 LTE AD HOC, R1-060155, 23 January 2006 (2006-01-23), XP002446639 Helsinki, Finland section 1 section 2.1 ----- | 1-17 | |
| | | | TECHNICAL FIELDS SEARCHED (IPC) |
| E | EP 1 811 701 A (SAMSUNG ELECTRONICS CO LTD [KR]) 25 July 2007 (2007-07-25) * paragraphs [0015], [0020] - [0022], [0032], [0037], [0040], [0058] * ----- | 1-9, 15-17 | H04Q |

The present search report has been drawn up for all claims

| Place of search | Date of completion of the search | Examiner |
|---|---|---|
| Munich | 13 August 2007 | Zembery, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 07 00 5486

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2007

| Patent document cited in search report | | Publication date | Patent family member(s) | Publication date |
|---|---|---|---|---|
| EP 1811701 | A | 25-07-2007 | WO 2007078146 A1 | 12-07-2007 |

For more details about this annex : see Official Journal of the European Patent Office, No. 12/82